Europäisches Patentamt

European Patent Office

Office européen des brevets

(11) Veröffentlichungsnummer: **0 504 447 A1**

# EUROPÄISCHE PATENTANMELDUNG

(21) Anmeldenummer: **91104260.4**

(22) Anmeldetag: **19.03.91**

(51) Int. Cl.5: **B29B 7/76**, C08G 18/50, C08L 75/02

(43) Veröffentlichungstag der Anmeldung:
**23.09.92 Patentblatt 92/39**

(84) Benannte Vertragsstaaten:
**AT BE CH DE DK ES FR GB GR IT LI LU NL SE**

(71) Anmelder: **Krauss-Maffei Aktiengesellschaft**
**Krauss-Maffei-Strasse 2**
**W-8000 München 50(DE)**

(72) Erfinder: **Bauer, Adolf**
**Heideweg 24b**
**W-8037 Olching(DE)**
Erfinder: **Urban, Franz, Dipl.-Ing. (FH)**
**Amselstrasse 18**
**W-8201 Rohrdorf/Thansau(DE)**
Erfinder: **Renkl, Josef**
**Hochstrasse**
**Marktindersdorf(DE)**

(54) **Verfahren und Vorrichtung zur Herstellung von geschäumten Massen auf Basis von Polyharnstoffelastomeren.**

(57) Ein Verfahren und eine Vorrichtung zur Herstellung von geschäumten Massen auf Basis von Polyharnstoffelastomeren durch Umsetzung unter intensivem Mischen von

a.) aliphatischen Polyetheraminen, die primäre Aminofunktionen und im wesentlichen keine freien Hydroxylgruppen aufweisen,

b.) Polyisocyanaten einschließlich Prepolymeren derselben,

c.) Wasser und

d.) tertiäre Aminogruppen aufweisenden Katalysatoren, in Gegenwart von

e.) Kohlendioxid und gegebenenfalls weiteren, inerten Gasen, sowie gegebenenfalls in Anwesenheit von

f.) üblichen Polyharnstoffadditiven

wobei das Kohlendioxid mindestens teilweise als Carbamat, erhalten durch Umsetzung mit den aliphatischen Polyetheraminen, eingesetzt wird, gekennzeichnet durch die Verwendung eines Mischkopfes mit

g.) einer vorzugsweise zylindrischen Mischkammer

h.) drei in die Mischkammer 2 einmündenden Komponentenzulaufleitungen 3,4,5 für die Komponenten A, B und C, wobei die Komponenten A aus den Substanzen a.), d.), e.), f.) und Kohlendioxid als Carbamat, erhalten durch Umsetzung mit den aliphatischen Polyetheraminen; die Komponente B aus den Reaktanten b.) und die Komponente C aus Wasser (Reaktant c.)) besteht,

i.) einem in der Mischkammer reversierbar geführten Mischkammerkolben 9 zur zeitsynchronen Auf- und Zusteuerung der in die Mischkammer 2 mündenden Komponentenzulaufleitungen 3,4,5,

k.) und einem an der Austrittsöffnung 12 der Mischkammer 2 angeordneten Drosselspalt 15,

ergibt Schaumstoffe mit niedriger Dichte und günstigen technologischen Eigenschaften wie Geruchsfreiheit, Gehalt an nicht umgesetzten Diisocyanaten und dergleichen.

EP 0 504 447 A1

Fig. 1

Die Erfindung betrifft ein Verfahren und eine Vorrichtung zur Herstellung von geschäumten Massen auf Basis von Polyharnstoffelastomeren.

Zur Herstellung von geschäumten Produkten haben sich Polyurethane durch ihre Vielseitigkeit und Anpassungsfähigkeit an die Produktionsbedingungen und die Verbraucherwünsche weltweit als ein wichtiger und unverzichtbarer Bestandteil der industriellen Polymeren etabliert. Die Herstellung von Polyurethanen beruht auf ausgereiften Arbeitsmethoden.

Gegenwärtig werden aus den verschiedensten Gründen neue Anforderungen an die Polyurethantechnologie gestellt, die nachhaltige Veränderungen bezüglich der Herstellungs- und der Verarbeitungsbedingungen erfordern. Hier ist insbesondere auf die Vermeidung von Fluorchlorkohlenwasserstoffen als Treibmittel hinzuweisen. Die Hinwendung zu wesentlichen teureren Ersatzprodukten gleicher Art mit geringem Potential hinsichtlich der Umweltbelastung ist zwar denkbar; der Einsatz von halogenfreien Treibgasen, insbesondere von Kohlendioxid, ist jedoch aus ökologischen Gründen vorzuziehen und bereits aus wirtschaftlichen Gründen weitaus attraktiver. Trotz zahlreicher, in der Vergangenheit unternommener Versuche hat sich der Einsatz von Kohlendioxid Frothing als Ersatz für Fluorchlorkohlenwasserstoffe nicht bewährt, wie eine erst jüngst erschienene Veröffentlichung aufzeigt, vgl. M. Taverna, Conference paper UTECH 1990, Seiten 70 bis 73.

Auch aus anderen Gründen als der vorstehend erwähnten Problematik der bisher verwendeten Treibgase ergeben sich notwendige Änderungen in der Polyurethantechnologie. So wird eine deutliche Verbesserung der Produktqualitäten notwendig, z.B. um die Lebensdauer der Formmassen drastisch zu erhöhen. In den Vordergrund geraten hier z.B. Anforderungen zur nachhaltigen Verbesserung des Lasttragevermögens und der gesamten Alterungscharakteristik von Schaumstoffen. Ebenfalls aus Qualitätsgründen wird eine Reduktion von Geruchs- und Fogging-Problemen der Fertigprodukte sowohl seitens der verarbeitenden Industrie als auch der Verbraucher verlangt. Hier ist insbesondere zu beachten, daß alle nicht in der Polymermatrix chemisch fixierten Einsatzstoffe, sofern sie nicht extrem hohe Dampfdrücke aufweisen, zur Geruchs- und Foggingproblematik beitragen. Hiervon betroffen sind ebenfalls Aspekte der Arbeitshygiene, der Toxikologie und der Ökologie. Nicht umgesetzte Isocyanate, Phtalate als Lösemittel für bestimmte Additive, teilweise flüchtige, metallorganische Verbindungen, jedoch auch bestimmte Aminkatalysatoren sollen hier als beispielhaft für die angedeutete Problematik genannt werden.

Eine möglichst weitgehende Vermeidung flüchtiger Bestandteile während der Produktion und im fertigen Produkt dient damit nicht nur zu dessen Qualitätsverbesserung, sondern zwangsläufig auch zur besseren Berücksichtigung von Aspekten der Arbeitshygiene, der Toxikologie und der Ökologie. Das öffentliche Interesse an dieser Thematik bedingt rapide ansteigende Anforderungen an die Schaumstofftechnologie.

Es wird daher weltweit nach neuen Rohstoffen gesucht, mit deren Hilfe mehrere oder alle aktuell gewordenen Probleme der Schaumstofftechnologie gelöst werden können. Im Vordergrund solcher Überlegungen steht unter anderem der Einsatz von höhermolekularen Polyolen als Ausgangsprodukte für die Polyurethan-Schaumstofftechnologie.

In der neueren Fachliteratur ist als Trend die Hinwendung zu Polyetheraminen als Reaktionskomponenten in der Polyurethanherstellung erkennbar. Im Gegensatz zu klassischen Polyolen, die mindestens 2 freie Hydroxylgruppen aufweisen, weisen die Polyetheramine anstelle der freien Hydroxylgruppen Reste von primären oder sekundären aliphatischen Aminen oder primären aromatischen Aminen auf.

In R.D. Priester, R.D. Peffley und R.B. Turner; Proceedings of the SPI-32nd Technical Marketing Conference; San Francisco, 1989, wird die Verwendung von Aminopolyolen mit sekundären aliphatischen oder primären aromatischen Aminofunktionen zur Herstellung von geschäumten Polyharnstoffen mit niedriger Raumdichte beschrieben; es wird ausgeführt, daß diese Materialien in mehrfacher Hinsicht gegenüber konventionellen Polyurethanschaumstoffen deutliche Vorteile aufweisen. Auffällig ist dabei das beachtlich erhöhte Lasttragevermögen, eine erheblich verbesserte Alterungscharakteristik und nicht zuletzt auch eine Verbesserung im Flammverhalten.

Weiterhin ist in der EP-A 0 279 536 beschrieben, daß langkettige, aliphatische, oligofunktionelle sekundäre Amine zusammen mit Polyisocyanaten unter Mitwirkung üblicher Katalysatoren und Additiven zu Polyharnstoffschäumen verarbeitet werden können, ohne daß diese jedoch näher charakterisiert werden.

Diese Arbeitstechnik kann mehrere der eingangs erwähnten Forderungen erfüllen und ist damit als Fortschritt anzusehen. Nicht erreicht wurde damit jedoch der Verzicht auf klassische Additive, z.B. auf Zinn- und solche Aminkatalysatoren, die zu Geruchs- und Foggingproblemen beitragen. Für den Fachmann ist ferner ein weiter Nachteil erkennbar, der die technische Anwendbarkeit dieser Arbeitsweisen betrifft. Bisher ist es nämlich nicht gelungen, derartige Polyetheramine nach einfachen Methoden herzustellen, die wirtschaftlichen und technischen Forderungen genügen. Diese Nachteile betreffen Rohstoffkosten, Ausbeuten und/oder die chemische Einheitlichkeit der entstehenden Produkte.

Eine Beschreibung für die Herstellung und Verwendung von Produktgemischen überwiegend sekundäre Aminofuktionen enthaltender Polyetheramine zur Herstellung von geschäumten Polyharnstoffen ist in der Literatur mehrfach erfolgt. Vorgeschlagen wurde die Derivatisierung von langkettigen, aliphatischen, oligofunktionellen, primären Aminen (US-A 3 654 370), z.B. durch Alkoxylierung, Cyanethylierung, Alkoholaminierung und reduktive katalytische Aminierung.

Ein anderer Verfahrensweg schlägt vor, kurzkettige, primäre aliphatische Amine mit Polyoxylkylenverbindungen in einer katalytischen Reaktion ähnlich der Lehre der US-A 3 654 370 zur Herstellung langkettiger, aliphatischer, oligofunktioneller, sekundärer Amine zu verwenden; vgl. US-A 4 904 705.

Auch für die Herstellung von aromatischen Polyetheraminen wurden verschiedene Verfahrenswege vorgeschlagen, z.B. die Umsetzung handelsüblicher Polyhydroxypolyether mit Isatosäureanhydrid in einem Schritt oder auch nach mehrstufigen Verfahren. In diesem Sinne lehrt z.B. DE-A 2 948 419 die Umwandlung von handelsüblichen Polyhydroxypolyethern mit aromatischen Diisocyanaten in Prepolymere, mit nachfolgender Hydrolyse der verbleibenden Isocyanatgruppen, wobei Aminopolyole mit endständigen, an aromatische Reste gebundenen Aminogruppen entstehen.

Es ist in der Polymerchemie jedoch bekannt, daß sich die Produkteigenschaften von Polymeren um so besser kontrollieren und beeinflussen lassen, je einheitlicher die jeweils verwendeten Rohstoffe sind. Dies gilt gleichermaßen für die Bildung und für die Produkteigenschaften für die vorstehend diskutierten Polyurethanpolymeren. Im betrachteten Falle, speziell hinsichtlich der reaktiven Endgruppen, wäre also die Vermeidung von statistischen Verteilungen unterschiedlich substituierter Amine besonders vorteilhaft.

Es lassen sich, wenn auch nur mit erheblich erhöhtem Aufwand, sehr einheitliche, langkettige, aliphatische, oligofunktionelle, sekundäre Amine herstellen, vgl. DE-A 38 25 637. Dabei werden durch Hydrierung von Schiff'schen Basen, die aus Ketonen und oligofunktionellen primären Polyoxypropylenaminen zugänglich sind, derartige Produkte hergestellt.

In der Tat stellen oligofunktionelle Polyoxypropylenamine mit primären endständigen Aminogruppen, deren Verwendung die DE-A 38 25 637 zur Herstellung von Polyetheraminen mit sekundären Aminogruppen lehrt, großtechnisch verfügbare Rohstoffe dar, die z.B. unter der Handelsbezeichnung JEFFAMINE[R] - (Fa. Texaco) erhältlich sind. Die Molmassen dieser Stoffe liegen im Bereich zwischen 230 und 8 000; ihre Aminfunktionalität beträgt zwischen 1 und 3.

Die Herstellung dieser Produkte, z.B. gemäß US-A 3 654 370, gelingt in einem Schritt aus petrochemischen Massenprodukten, nämlich Dioxypropylenpolyolen und Ammoniak.

Eine direkte Verwendung solcher Produkte zur Herstellung von geschäumten Polyharnstoffen niedriger Raumdichte wäre somit weitaus wirtschaftlicher und aus technischen Gründen daher erwünscht, weil diese Stoffe durch einen besonders hohen Aminierungsgrad und hohe Einheitlichkeit hinsichtlich ihrer Endgruppen ausgezeichnet sind. Ein weiterer Vorteil derartiger Produkte ist auch darin zu sehen, daß zum Aufbau dieser Polyolkörper auf Strukturelemente wie Ester, Urethane oder Ethoxylreste vollständig verzichtet werden kann.

Die Literatur zeigt jedoch, daß sich unter Verwendung von aliphatischen Polyetheraminen mit primären Aminofunktionen zwar hartelastische, "geschäumte" Polyharnstoffe mit hoher Raumdichte und mit ausgezeichneten Eigenschaften erzeugen lassen, die Literatur zeigt jedoch auch, daß die extrem hohe Reaktivität dieser Polyetheramine die Herstellung von geschäumten Polyharnstoffen niedriger Raumdichte verbietet.

Bei der Herstellung von "geschäumten" Polyharnstoffen mit hohen Raumdichten (800 bis 1300 kg/m$^3$), mit besonderem Bezug auf die Verwendung primärer, oligofunktioneller, langkettiger aliphatischer Amine, werden Reaktionszeiten von maximal 2 bis 3 Sekunden beobachtet, während der die eingesetzten flüssigen Rohstoffe zu einer festen, nicht mehr fließfähigen Masse erstarren.

Nach den Lehren der EP-A 0 081 701 und der US-A 4 269 945 kann man bei diesen Verfahren Treibmittel einsetzen. Dadurch wird eine Verbesserung der Produkteigenschaften angestrebt, namentlich der Oberflächenqualität hartelastischer Formkörper. Mit dieser Maßnahme werden mikrocellulare, "geschäumte" Stoffe mit hohen Raumdichten von mehr als 800 kg/m$^3$ erhalten. Bewährt hat sich bei dieser Arbeitsweise allein die Verwendung von permanenten, getrockneten Gasen, insbesondere Stickstoff oder Luft; diese Arbeitsweise wird allgemein als "Nukleation" bezeichnet. Obwohl bei diesen Arbeiten die Verwendung und/oder Mitverwendung von autogen erzeugtem Kohlendioxid vorgeschlagen wird, geben sie jedoch keinerlei praktische Hinweise, wie die enorm rasche Reaktion, bei der das Reaktionsgemisch zu einer fließunfähigen Masse erstarrt, mit der vergleichsweise sehr viel langsameren katalytischen Reaktion von Wasser mit Isocyanaten sinnvoll aufeinander abgestimmt werden könnte. Auch die US-A 4 910 231, gemäß der u.a. ein primäre Aminogruppen aufweisendes Polyetheramin mit einem Überschuß an Polyisocyanat und Wasser unter Bildung eines Hartschaums umgesetzt werden kann, vermittelt hierzu keine Anregung.

Demgemäß ist das Verfahren der Erfindung auf die Herstellung von Polyharnstoffschäumen aus Polyetheraminen mit primären Aminogruppen und Polyisocyanaten gerichtet, bei dem trotz der hohen, bei derartigen Systemen zu erwartenden Reaktionsgeschwindigkeiten Schaumstoffe mit niedriger Dichte und günstigen Eigenschaften, u.a. hinsichtlich Geruchsfreiheit, Elastizität, Entformbarkeit, Gehalt an nicht umgesetzten Diisocyanaten und dergleichen erhalten werden können.

Diese Aufgabe wird erfindungsgemäß durch ein Verfahren zur Herstellung von geschäumten Massen auf Basis von Polyharnstoffelastomeren gelöst, bei dem unter intensivem Mischen eine Umsetzung von

a) aliphatischen Polyetheraminen, die primäre Aminofunktionen und im wesentlichen keine freien Hydroxylgruppen aufweisen,

b) Polyisocyanaten einschließlich Prepolymeren derselben,

c) Wasser und

d) tertiäre Aminogruppen aufweisenden Katalysatoren,

in Gegenwart von

e) Kohlendioxid und gegebenenfalls weiteren, inerten, halogenfreien Gasen

sowie gegebenenfalls in Anwesenheit von

f) üblichen Polyharnstoffadditiven,

wobei das Kohlendioxid mindestens teilweise als Carbamat, erhalten durch Umsetzung mit den aliphatischen Polyetheraminen, eingesetzt wird, erfolgt, und bei dem die intensive Vermischung durch die Verwendung eines Mischkopfes mit

g) einer zylindrischen Mischkammer,

h) drei in die Mischkammer einmündenden Komponentenzulaufleitungen für die Komponenten A, B und C, wobei die Komponente A aus den Reaktanten a.),d.),e.) und f.) und Kohlendioxid als Carbamat, erhalten durch Umsetzung mit den aliphatischen Polyetheraminen; die Komponente B aus den Substanzen d.) und die Komponente C aus Wasser besteht,

i) einem in der Mischkammer reversierbar geführten Kolben zur zeitsynchronen Auf- und Zusteuerung der in die Mischkammer mündenden Komponentenzulaufleitungen

k) und einem an der Austrittsöffnung der Mischkammer angeordneten Drosselspalt erfolgt.

Gemäß einer bevorzugten Ausführungsform der Erfindung beträgt der Druck in den Komponentenzulaufleitungen unmittelbar vor der Einmündung in die Mischkammer zwischen 80 und 180 bar. Dabei ist es besonders bevorzugt, daß der Druck in den Komponentenzulaufleitungen für die Komponenten A und B unmittelbar vor der Einmündung in die Mischkammer im Bereich von 140 bis 160 bar und der Druck in der Komponentenzulaufleitung für die Komponente C unmittelbar vor der Einmündung in die Mischkammer im Bereich von 80 bis 110 bar liegt.

Gemäß einer weiteren vorteilhaften Ausführungsform der Erfindung liegt die Temperatur der Komponeten A, B und gegebenenfalls C unmittelbar vor der Einmündung in die Mischkammer im Bereich zwischen 20 und 60⁰C. Es kann jedoch zweckmäßig und unter den Gesichtspunkten der Produktqualität auch vorteilhaft sein, für die Komponente C eine Temperatur zu wählen, die im Bereich zwischen 90 und 120⁰C liegt.

Gemäß einer weiteren vorteilhaften Ausführungsform der Erfindung erfolgt die Zudosierung der Komponenten A, B und C sowie die Bemessung der Mischkammer und des Drosselspaltes mit der Maßgabe, daß sich am Drosselspalt eine Austrittsgeschwindigkeit für das Komponentengemisch im Bereich von 8 bis 16 m/s ergibt.

Die Erfindung ist weiterhin auf eine Vorrichtung zur Durchführung des Verfahrens der Erfindung gerichtet, bei der der Drosselspalt durch einen an der Austrittsöffnung der Mischkammer angeordneten Querschieber gebildet ist. Alternativ kann in ebenfalls vorteilhafter Weise der Drosselspalt durch eine im Angußkanal eines Formwerkzeugs ausgebildete Verengung gebildet sein.

Weiterhin bevorzugt ist eine Vorrichtung zur Durchführung des Verfahrens der Erfindung, bei der sich an die Mischkammer, vorzugsweise im rechten Winkel eine Beruhigungskammer mit im Vergleich zur Mischkammer größerem Querschnitt anschließt, in der ein weiterer reversierbarer Kolben angeordnet ist, mit dem in einer die Austrittsöffnung der Mischkammer teilweise verschließenden Stellung ein einstellbarer Drosselspalt erzeugbar ist.

Gemäß einer weiteren vorteilhaften Ausführungsform der Erfindung münden die Komponentenzulaufleitungen im Winkel von jeweils ca. 90⁰ zueinander in die Mischkammer.

Für das Verfahren der Erfindung können sämtliche aus dem Stand der Technik bekannten aliphatischen Polyetheramine, die im wesentlichen keine freien Hydroxylgruppen aufweisen und deren Aminofunktionen primär sind, einschließlich Mischungen derselben, eingesetzt werden. Diesen Polyetheraminen können auch andere Polyetheramine, die ebenfalls hydroxylgruppenfrei sind, jdeoch sekundäre Aminofunktionen enthalten und als solche ebenfalls aus dem zuvor diskutierten Stand der Technik bekannt sind, zugemischt werden, jedoch höchstens in einer Menge von 65 Gew.-%, bezogen auf eingesetzte aliphatische Polyetheramine mit primären Aminofunktionen. Durch den Zusatz dieser "sekundären" Polyetheramine, die weniger reaktiv als die "primären" aliphatischen Polyetheramine sind, lassen sich über die Reaktionszeiten die Produkteigenschaften in gewissem Umfang beeinflussen.

Besonders bevorzugt für das Verfahren der Erfindung sind Polyetheramine der allgemeinen Formel I

$$R^2([0-(CH_{2m})-CHR^1]_n[0-(CH_2)_3-]_o-NH_2)_p$$

in der
$R^1$ Wasserstoff und m die Zahl 1 oder 3
oder
$R^1$ Methyl und m die Zahl 1,
n eine Zahl im Bereich von 1 bis 100,
o die Zahl 0 oder 1
sowie
$R^2$ ein zweibindiger Rest gemäß einer der Formeln IIa bis IIc

$$-CH_2-CHR^3- \qquad (IIa)$$

$$-CH_2CH_2CH_2CH_2- \qquad (IIb)$$

$$-CHR^3CH_2-NH-CO-NH-CH_2-CHR^3- \qquad (IIc)$$

in denen
$R^3$ Wasserstoff oder Methyl ist,
und p die Zahl 2
oder
$R^2$ ein dreibindiger Rest gemäß einer der Formeln IIIa bis IIIc:

$$CH_3-C(CH_2-)_3 \qquad (IIIa)$$

$$CH_3-CH_2-C(CH_2-)_3 \qquad (IIIb)$$

$$(-CH_2)_2CH- \qquad (IIIc)$$

und p die Zahl 3
bedeuten.

Die Herstellung der Polyetheramine der allgemeinen Formel I ist u.a. in der US-A 3 654 370 beschrieben. Danach werden Polypropylenglykolether mit Ammoniak und Wasserstoff in Gegenwart geeigneter Katalysatoren umgesetzt. Die Funktionalität der entstehenden Produkte läßt sich dadurch beeinflussen, daß man als Starter für die eingesetzten Polypropylenglykolether niedermolekulare Diole oder Triole einsetzt. Üblicherweise sind dies z.B. Ehtylenglykol, Propylenglykol, Butandiol, Glycerin, Trimethylolpropan und dergleichen, die zunächst ethoxyliert und/oder propoxyliert werden; vgl. auch "The JEFFAMINE Polyoxyalkyleneamines", Firmenschrift der Fa. Texaco Chem. Comp., Houston, Texas, U.S.A. (1989). Selbstverständlich können als Starter auch Polyethylenglykole oder Polymere 1,4-Butandiole für die nachfolgende Propoxylierung eingesetzt werden, um spätere anwendungstechnische Eigenschaften, z.B. Kristallinität, Flexibilität und/oder Wasseraufnahmevermögen und dergleichen zu modifizieren.

Im Verfahren der Erfindung geeignete Polyetheramine mit primären Aminofunktionen sind auch gemäß DE-B 1 193 671 durch Cyanethylierung von Polyhydroxypolyolen mit Acrylnitril und nachfolgender katalytischer Reduktion zugänglich. Weitere Verfahren zur Herstellung von im Rahmen der Erfindung einsetzbaren Polyetheraminen mit primären Aminofunktionen sind u.a. in US-A 3 155 728, US-A 3 236 895 und FR-A 1 551 605 beschrieben.

Besonders bevorzugte Polyetheramine mit primären Aminogruppen sind solche, die überwiegend und/oder ausschließlich Propylenoxygruppen enthalten, d.h. sich von Anlagerungsprodukten des Propylenoxids an Verbindungen mit reaktiven Hydroxylgruppen ableiten, da diese Bausteine in den gebildeten Produkten günstige Eigenschaften ergeben, z.B. eine geringe Wasseraufnahme, eine hohe Flexibilität und dergleichen.

Falls allerdings aus anwendungstechnischen Gründen hinsichtlich der entstehenden Produkte eine hohe Wasseraufnahme und eine Erhöhung der Kristallinität verlangt wird, werden bevorzugt Polyetheramine mit primären Aminogruppen eingesetzt, die größere Anteile an/oder ausschließlich Ethylenoxy- bzw. Butylenoxy-Bausteine enthalten, gegebenenfalls in Mischung mit den vorgenannten Polyetheraminen mit Propylenoxybausteinen.

Wie bereits gesagt, können zusammen mit den erfindungsgemäß einzusetzenden Polyetheraminen mit primären Aminofunktionen auch solche mit sekundären Aminofunktionen eingesetzt werden; derartige mitzuverwendende Polyetheramine sind in den US-A 3 666 788, US-A 3 155 728 und DE-A 38 25 637 erläutert. Bei einer Mitverwendung dieser Polyetheramine werden als Substituenten die folgenden Endgruppen und/oder Reste besonders bevorzugt: 2-Hydroxyothyl, 2-Hydroxypropyl, Propionitril oder als Alkylreste: n-Butyl, s-Butyl, i-Butyl, 1,3-Dimethyl-1-pentyl und Cyclohoxyl.

Da, wie bereits gesagt, in den erfindungsgemäß einzusetzenden aliphatischen Polyetheraminen mit primären Aminogruppen solche Verbindungen bevorzugt sind, die Propylenoxybausteine enthalten, werden nach einer bevorzugten Ausführungsform der Erfindung Polyetheramine der allgemeinen Formel I eingesetzt, in der $R^1$ Methyl und m die Zahl 1 ist sowie $R^2, R^3, n, o$ und p wie oben definiert sind.

Gemäß einer weiteren vorteilhaften Ausführungsform der Erfindung weisen die Polyetheramine mit primären Aminogruppen Zahlenmittel der Molmassen im Bereich von 200 bis 12 000 auf.

Die in dem Verfahren der Erfindung einzusetzenden Polyisocyanate können als Trägergruppen aromatische, aliphatische und/oder gemischt aliphatische/aromatische Gruppen enthalten. Typische Beispiele für im Rahmen der Erfindung einzusetzende Polyisocyanate sind geradkettige, aliphatische Diisocyanate wie 1,4-Diisocyanatobutan, 1,5-Diisocyanatopentan, 1,5-Diisocyanatohexan und dergleichen; cycloaliphatische Diisocyanate wie 1,4-Diisocyanatocyclohexan oder Isophorondiisocyanat bzw. Isomerengemische derselben, sowie eine Vielzahl aromatischer Diisocyanate. Zur letztgenannten zählen Isomerengemische von 2,4- und/oder 2,6 Diisocyanatoluol (TDI-Typen), 2,2'-,2,4' und 4,4'-Diisocyanatodiphenylmethan (MDI-Typen), weiterhin 2,4-Diisocyanato-1-chlorbenzol, Isomerengemische von Diisocyanatoxylolen und dergleichen. Eine detaillierte Auflistung handelsüblicher, geeigneter Polyisocyanate findet sich in G. Dertel, Kunststoffhandbuch, Band VII (Polyurethane), Carl-Hanser-Verlag, München und Wien 1983, insbesondere auf den Seiten 63 bis 73. Bevorzugt sind dabei die vorgenannten TDI-und MDI-Typen, insbesondere die MDI-Typen, gegebenenfalls in Mischung mit den TDI-Typen.

Zu den MDI-Typen sind solche zu zählen, die entweder geringe Mengen höherer Homologe aus der Synthese dieser Stoffe enthalten, oder als Carbodiimidderivate reiner MDI-Typen im Handel erhältlich sind.

Ferner zählen zu den erfindungsgemäß einzusetzenden Diisocyanaten Prepolymere, insbesondere des MDI`s, z.B. gemäß US-C 4 737 919, die aus Diisocyanaten und primären langkettigen aliphatischen Aminen erhältlich sind. Es kann zweckmäßig sein, diese Produkte im Verfahren der Erfindung nicht separat, sondern während des Injektionsvorgangs in einer eigens dazu vorgesehenen Einrichtung "online" zu erzeugen.

Im übrigen können die vorgenannten Prepolymere auch in Mischung mit den "monomoren" Polyisocyanaten eingesetzt werden.

Dem Fachmann ist bekannt, daß zur Erzielung optimaler Eigenschaften in geschäumten Polyurethankunststoffen aus morphologischen Gründen sogenannte "Hartsegmente" in der Polymermatrix enthalten sein müssen. Es ist weiterhin bekannt, daß zu diesem Zweck insbesondere aromatische Polyisocyanate mit Wasser unter Verwendung geeigneter Katalysatoren umgesetzt werden. Im Zuge dieser Reaktion entstehen aus den Polyisocyanaten und Wasser Carbaminsäuren, die unter Decarboxylierung in primäre aromatische Amine und Kohlendioxid zerfallen. Während die primären aromatischen Amine mit weiterem Isocyanat spontan zu polymerem Harnstoff abreagieren, der die Hartsegmente bildet, wird das autogen erzeugte Kohlendioxid als Treibgas genutzt. Es ist zwar möglich und aus dem Stand der Technik auch bekannt, dieses Prinzip zur Erzeugung der gesamten Treibgasmenge einzusetzen, doch hat dies den Nachteil, daß ein unerwünscht hoher Anteil an Hartsegment gebildet wird.

Da es zur Verbesserung der Produkteigenschaften ideal ist, nicht mehr Hartsegmente zu erzeugen und damit auch autogen gebildetes Treibgas, als für die angestrebten Eigenschaften gewünscht wird, wird der restliche Treibgasbedarf gemäß dem Stand der Technik durch leichtverdampfende Flüssigkeiten, die der Rezeptur zugesetzt werden, gedeckt. Bisher wurden hierfür Fluorchlorkohlenwasserstoffe eingesetzt. Wie bereits erwähnt wurde, liegt einer der Vorteile des Verfahrens der Erfindung darin begründet, daß hier Kohlendioxid als Treibmittel, gegebenenfalls in Gegenwart von inerten Gasen wie Stickstoff oder Luft, eingesetzt wird. Die Gase werden in genau der gewünschten Menge den Polyetheraminen unter Druck zugesetzt. Dabei reagiert mindestens ein Teil des zugesetzten Kohlendioxids mit den Polyetheraminen unter Bildung von Carbamaten; dadurch wird die enorm hohe Reaktionsfähigkeit der Polyetheramine auf ein praktikables Maß herabgesetzt. Gegebenenfalls enthält das Gemisch als Carbamat gebundenes neben gelöstem Kohlendioxid. Das auf diese Weise "nukleierte" Polyetheramin wird dann dem Reaktionssystem zugeführt. Dabei wird während der Schaumphase nicht der gefürchtete Effekt beobachtet, daß bereits beim Vermischen ein unkontrollierter Gasverlust zu Lasten der Schaumausbeute eintritt.

Auch gemäß dem Verfahren der Erfindung erfolgt die Bildung von Hartsegmentanteilen durch die katalytische Zersetzung von überschüssigem Isocyanat mit Wasser. Hierbei werden solche Katalysatoren verwendet, die die Isocyanat/Wasser-Reaktion so selektiv wie möglich beschleunigen. Weiterhin werden aus der Klasse der sogenannten "Treibkatalysatoren" solche bevorzugt, die Siedepunkte von mindestens 190⁰C aufweisen oder chemisch durch Einbau in die Polymermatrix gebunden werden können. Diese Eigenschaften sind einerseits für die Ausführung des Verfahrens der Erfindung wesentlich, andererseits jedoch auch von großer Bedeutung zur Vermeidung bzw. Verringerung von Geruchs- und Foggingeigenschaften der geschäumten Produkte.

Als Katalysatoren zur Verwendung in dem Verfahren der Erfindung können an sich aus der Polyurethanchemie bekannte tertiäre Amine eingesetzt werden. Ein Überblick über Arten und Wirkungsweisen findet sich in dem vorgenannten "Kunststoffhandbuch", Band VII (Polyurethane), insbesondere auf den Seiten 92 bis 98.

Gemäß einer bevorzugten Ausführungsform der Erfindung weisen die tertiäre Aminogruppen aufweisenden Katalysatoren die allgemeine Formel IV

$$X\text{-}CH_2\text{-}CH_2\text{-}M\text{-}CH_2\text{-}CH_2\text{-}Y \qquad (IV)$$

auf, in der
M ein Sauerstoffatom oder eine Methyliminogruppe
X und Y, die gleich oder verschieden sein können, N-Morpholinyl-, N-Azanorbornyl-, Dimethylamino-oder Dimethylaminoethyl-Gruppen bedeuten oder X wie vorstehend definiert ist und Y eine Hydroxylgruppe oder eine N-Methyl-N-(2-hydroxy-$C_1$-bis $C_2$-alkyl)-aminogruppe bedeutet.

Besonders bevorzugte Katalysatoren sind aus der von 2,2-Dimorpholinoethylether, 2-(2-Dimethylamino)-ethoxyethanol, Dis-(2-dimethylaminoethyl-)ether, 2-(2-Dimethylaminoethyl-)-2-methylaminoethanol und 2-(2-(Dimethylaminoethoxy)-ethyl-methyl-aminoethanol gebildeten Gruppe ausgewählt. Typische Beispiele für derartige Katalysatoren sind:
Dis-(2-dimethylaminoethyl)-ether
2,2-Dimorpholinodiethylether
2-(2-(Dimethylaminoethoxy)-ethyl-methyl-amino-ethanol
2-(2-Dimethylaminoethoxy-)ethanol
N,N,N',N',N''-Pentamethyldiethylentriamin
Bis-(azanorbornylethyl-)ether, gemäß DE-A 37 07 911
2-(2-Hydroxyethoxy-)ethyl-azanorbornan, gemäß DE-A 37 07 911
2-(2-Dimethylaminoethyl-)-2-methylaminoethanol
N,N,N'-Trimethyl-N'(ethoxyethanol)ethylendiamin, gemäß US-A 4 582 983
2,5,11-Trimethyl-2,5,11-triaza-8-oxa-dodecan, gemäß US-A 4 582 983.

(Soweit nicht anderes angegeben, sind die vorgenannten Verbindungen im Handel erhältlich).

Ein weiterhin bevorzugter, tertiäre Aminogruppen aufweisender Katalysator ist 2,2,4-Trimethyl-1-oxa-2-sila-4-aza-cyclohexan.

Gemäß einer weiteren vorteilhaften Ausführungsform der Erfindung werden die Katalysatoren in Mengen von 0,01 bis 5, insbesondere von 0,05 bis 3 phr, bezogen auf Polyetheramine, verwendet. Die Katalysatoren werden vorzugsweise in Wasser gelöst und als wäßrige Lösung dem Reaktionssystem zugeführt. Die Wassermenge wird dabei so berechnet, daß sie mindestens der aliquoten Polyisocyanatmenge, die zur Bildung der formulierungsgemäß gewünschten Menge von Hartsegment und autogen erzeugtem Treibgas erforderlich ist, entspricht; die zugesetzte Wassermenge kann jedoch auch einen mehrfachen Überschuß dieser Menge betragen.

Da nach dem Verfahren der Erfindung besonders geruchsarme Produkte hergestellt werden können, erweisen sich viele der in der Polyurethanchemie üblichen Katalysatoren, z.B. 1,4-Diazabicyclo(2,2,2)octan, Dimethylethanolamin, Dimethylcyclohexylamin, Methylazanorbornan und dergleichen wegen ihrer beträchtlichen Geruchsaktivität sogar auch als unerwünscht, auch wenn diese Stoffe prinzipiell einsetzbar sind.

Ein weiterer, nicht unwesentlicher Vorteil des Verfahrens der Erfindung ist dadurch begründet, daß mit Ausnahme der bereits erwähnten, unverzichtbaren, sogenannten "Treibkatalysatoren" andere Katalysatoren nicht mehr erforderlich sind, einschließlich der sonst üblicherweise in der Polyurethanchemie eingesetzten metallorganischen Katalysatoren. Wie bereits weiter oben angedeutet wurde, ergeben sich für das Verfahren der Erfindung keinerlei Nachteile, wenn ein Wasserüberschuß über die berechnete, formulierungsbedingte Menge eingesetzt wird. Dadurch läßt sich der Gehalt an freiem Polyisocyanat in den Endprodukten wirksam auf ein Minimum reduzieren. In dem Verfahren der Erfindung können übliche Polyurethan- bzw. Polyharnstoffadditive eingesetzt werden, wie sie in dem vorerwähnten Kunststoffhandbuch, Band VII (Polyurethane), insbesondere Seiten 100 bis 109, beschrieben sind. Typische Beispiele sind Schaumstabilisatoren. Flammschutzmittel, Alterungsschutzmittel, inerte mineralische, anorganische oder organische Füllstoffe, inerte Trennmittel und dergleichen.

Für die Durchführung des erfindungsgemäßen Verfahrens kann ein Mischkopf nach dem DE-PS 23 27 269 verwendet werden, wie er auch in der vorerwähnten Veröffentlichung von M. Taverna, insbesondere Seite 70, dargestellt ist; bei dem dort gezeigten Mischkopf ist lediglich eine weitere Zuführungsleitung für das Wasser/Katalysator-Gemisch vorzusehen. Gemäß der Erfindung führt man dem Mischkopf getrennte Ströme der aliphatischen Polyetheramine, enthaltend als Carbamat gebundenes Kohlendioxid, gegebenenfalls gelöstes Kohlendioxid und andere inerte, halogenfreie Treibgase sowie gegebenenfalls zuzusetzende Polyharnstoffadditive, der Polyisocyanate einschließlich der Prepolymere derselben und der katalysatoren in Mischung mit Wasser zu und läßt das erhaltene Gemisch nach dem Durchströmen eines an der Austrittsöffnung der Mischkammer des Mischkopfes angeordneten Drosselspaltes ausreagieren; dabei ist auch möglich, einen Teil oder die Gesamtmenge der Katalysatoren zusammen mit den Polyetheraminen dem Mischkopf zuzuführen. Zur Erniedrigung der Viskosität und/oder zur Einstellung der Reaktionszeiten kann es zweckmäßig sein, die Reaktantenströme vorzuwärmen.

Weiterhin ist es bevorzugt, die Umsetzung bei überatmosphärischem Druck durchzuführen.

Mit dem Verfahren bei erfindungsgemäßer Verwendung eines mit einem Drosselspalt versehenen Mischkopfes lassen sich geschäumte elastische Polyharnstoffmassen mit Raumdichten im Bereich von etwa 20 bis 300 g/l herstellen.

Diese Ströme der Komponenten der Reaktion können dabei nach einem One-Shot System verarbeitet werden.

Die Erfindung wird im folgenden anhand bevorzugter Ausführungsbeispiele näher erläutert.

Die Durchführung der Beispiele erfolgte in einem Mischkopf der weiter oben erläuterten Anordnung mit 3 separaten Zufuhrleitungen.

Beispiel 1.

|  | Stoff | Gew.-Teile | Dichte |
|---|---|---|---|
| Strom 1: | Jeffamine T 5000[1] | 80 | |
| | Jeffamine D 2000[2] | 20 | |

Tegostab  B 4690[3)]          1

Texacat  ZF   20[4)]         0,1

Kohlendioxid                 2,7[5)]

                            103,8                    1,034

Strom 2:   Suprasec VM 25[6)]    54                 1,175

Strom 3:   Wasser                  4                1,000


1) Produkt von Texaco Chemical Company, Polyoxypropylentriamin
   Aminäquivalent: 52mVal/g


2) Produkt von Texaco Chemical Company, Polyoxypropylendiamin
   Aminäquivalent: 98mVal/g


3) Produkt von Th. Goldschmidt AG, Silikon


4) Produkt von Texaco Chemical Company,
   Bis-(2-dimethylaminoethyl-)ether


5) Bei einem Stickstoffvordruck von 5 bar wurde gasförmiges Kohlendioxid
   eingetragen, bis die volumetrisch berechnete Menge aufgenommen war.


6) Fa. ICI, modifiziertes MDI (24,3 Gew.-% NCO-Gehalt).


Die Ströme 1, 2 und 3 wurden in einem Hochdruckmischkopf vereinigt und zur Erzielung eines verdichteten Schaumstoffes in eine geschlossene Kastenform injiziert.

|  | Versuch 1 | Versuch 2 |
|---|---|---|
| Komponenten | | |
| Temperatur, °C/Druck (bar) | | |
| Strom 1 | 40/150 | 43/150 |
| Strom 2 | 28/150 | 30/150 |
| Strom 3 | 20/90 | 50/90 |

Austrittsgeschwindigkeit
am Drosselspalt des
Mischkopfes:                                        12 m/s

| | | |
|---|---|---|
| Formtemperatur, $^{o}$C: | 70 | 70 |
| Schußgewicht,        g: | 500 | 450 |
| Formvolumen,        ml: | 7320 | 7320 |
| Formsteigzeit,    Sek.: | 40 | 36 |
| Klebfrei-zeit,    Sek.: | 180 | 170 |
| Entformungszeit, Sek.: | 240 | 240 |
| Schaumgewicht, kg/m$^{3}$: | 65 | 57 |

nach Aufdrücken
und Abkühlen.

das molare Verhältnis von $NH_2$-Gruppen der Polyetheramine zu den NCO-Gruppen betrug in diesem Beispiel 1:5,12 und das der überschüssigen NCO-Gruppen zu Wasser 1:1,77.

Beispiel 2.

| | Stoff | Gew.-Teile | Dichte |
|---|---|---|---|
| Strom 1: | Jeffamine T 5000[1] | 80 | |
| | Jeffamine D 2000[2] | 20 | |
| | Tegostab B 4690[3] | 1 | |
| | Texacat ZF 20[4] | 0,1 | |
| | Kohlendioxid | 2,7[5] | |
| | | 103,8 | 1.034 |
| | + Nachbeladung mit | | |
| | Kohlendioxid, bis | | |
| | Dichte (42 % Nukleierung) | | 0,601 |

11

Strom 2: Suprasec VM 25[6)]        48                    1,175
Strom 3: Wasser                     4                     1,000


1) Produkt von Texaco Chemical Company, Polyoxypropylentriamin
   Aminäquivalent: 52mVal/g


2) Produkt von Texaco Chemical Company, Polyoxypropylendiamin
   Aminäquivalent: 98mVal/g


3) Produkt von Th. Goldschmidt AG, Silikon


4) Produkt von Texaco Chemical Company,
   Bis-(2-dimethylaminoethyl-)ether


5) Bei einem Stickstoffvordruck von 5 bar wird gasförmiges Kohlendioxid
   eingetragen, bis die volumetrisch berechnete Menge aufgenommen worden ist


6) Fa. ICI, modifiziertes MDI (24,3 Gew.-% NCO-Gehalt).


Die Ströme 1, 2 und 3 wurden in einem Hochdruckmischkopf vereinigt und zur Erzielung eines verdichteten Schaumstoffes in eine geschlossene Kastenform injiziert.
Molare Verhältnisse:
$NH_2$:NCO = 1:4,55; NCO (Überschuß): Wasser 1:2,05


Versuch 3


| Komponenten | |
|---|---|
| -Temperatur, $^0$C/Druck (bar) | |
| Strom 1 | 40/150 |
| Strom 2 | 28/150 |
| Strom 3 | 20/90 |
| Austrittsgeschwindigkeit am Drosselspalt des Mischkopfes: | 12 m/s |
| Formtemperatur, $^0$C: | 70 |
| Schußgewicht, g: | 350 |
| Formvolumen, ml: | 7320 |
| Formsteigzeit, Sek.: | 40 |
| Klebfrei-Zeit, Sek.: | 180 |
| Entformungszeit, Sek.: | 240 |
| Schaumgewicht, kg/m$^3$ nach Aufdrücken und Abkühlen.: | 44 |


Die hergestellten Schaumstoffe der Versuche 1, 2 und 3 ließen sich nach dem Entnehmen aus der Form leicht aufdrücken, so daß ein sehr feinporiger offenzelliger Schaum entstand.

Der in den obigen Beispielen eingesetzte Mischkopf wird nachfolgend anhand der Zeichnung näher erläutert. Es zeigen:

Fig. 1    in schematischer Darstellung einen Schnitt durch einen Mischkopf,

Fig. 2    einen Schnitt durch die Mischkammer des Mischkopfes gemäß der Schnittlinie II-II in Fig. 1

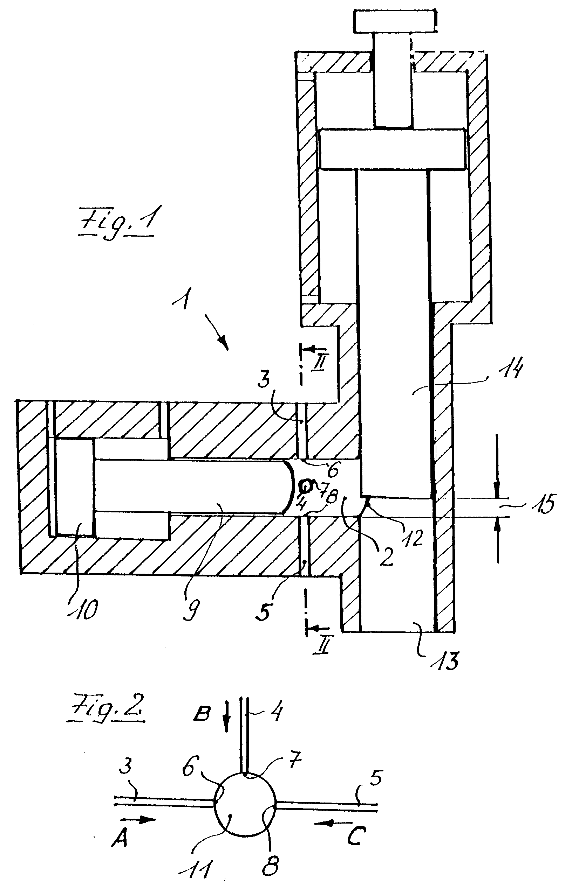

Der in Fig. 1 dargestellte Mischkopf 1 enthält eine zylindriche Mischkammer 2, in die jeweils im Winkel von $90^0$ versetzt (Fig. 2), drei Komponentenzulaufleitungen 3, 4 und 5 für die Zufuhr der Komponenten A, B und C einmünden. Die Einlaßöffnungen 6, 7 und 8 der Komponentenzulaufleitungen 3, 4 und 5 werden absolut zeitsynchron von einem in der Mischkammer 2 reversierbar geführten Mischkammerkolben 9 auf- und zugesteuert. Der Mischkammerkolben 9 ist durch einen Hydraulikkolben 10 betätigbar und befindet sich in der Mischstellung, in der die Einlaßöffnungen 6, 7 und 8 freigegeben sind, so daß die die Reaktanten enthaltenden Komponenten A, B und C unter hohem Druck in der Mischkammer 2 aufeinander treffen und sich dort innig durchmischen. In der Nichtmischphase bzw. in der Absperrstellung (nicht dargestellt) befindet sich der Mischkammerkolben 9 in einer Stellung, in der dessen Stirnfläche 11 die Auslaßöffnung 12 der Mischkammer 2 bündig abschließt. Das in der Mischkammer 2 gebildete Reaktantengemisch ist in der Absperrstellung durch den Mischkammerkolben vollständig aus der Mischkammer 2 entfernt.

In der in Fig. 1 dargestellten Mischphase tritt das reaktive Gemisch aus den Reaktanten-Komponenten A, B und C über die Auslaßöffnung 12 in die der Mischkammer 2 im rechten Winkel nachgeordnete Beruhigungskammer 13 ein, in der ein weiterer Kolben 14 reversierbar angeordnet ist. Der Kolben 14 befindet sich in einer Drosselstellung, in der dieser die Auslaßöffnung 12 unter Freihaltung eines Drosselspaltes 15 teilweise überdeckt.

## Patentansprüche

1.    Verfahren zur Herstellung von geschäumten Massen auf Basis von Polyharnstoffelastomeren durch Umsetzung unter intensivem Mischen von

a.) aliphatischen Polyetheraminen, die primäre Aminofunktionen und im wesentlichen keine freien Hydroxylgruppen aufweisen,

b.) Polyisocyanaten einschließlich Prepolymeren derselben,

c.) Wasser und

d.) tertiäre Aminogruppen aufweisenden Katalysatoren, in Gegenwart von

e.) Kohlendioxid und gegebenenfalls weiteren, inerten Gasen, sowie gegebenenfalls in Anwesenheit von

f.) üblichen Polyharnstoffadditiven

wobei das Kohlendioxid mindestens teilweise als Carbamat, erhalten durch Umsetzung mit den aliphatischen Polyetheraminen, eingesetzt wird, **gekennzeichnet** durch die Verwendung eines Mischkopfes mit

g.) einer vorzugsweise zylindrischen Mischkammer

h.) drei in die Mischkammer (2) einmündenden Komponentenzulaufleitungen (3,4,5) für die Komponenten A, B und C, wobei die Komponente A aus den Substanzen a.), d.), e.), f.) und Kohlendioxid als Carbamat, erhalten durch Umsetzung mit den aliphatischen Polyetheraminen, die Komponente B aus den Reaktanten b.) und die Komponente C aus Wasser (Reaktant c.)) besteht,

i.) einem in der Mischkammer reversierbar geführten Mischkammerkolben (9) zur zeitsynchronen Auf- und Zusteuerung der in die Mischkammer (2) mündenden Komponentenzulaufleitungen (3,4,5)

k.) und einem an der Austrittsöffnung (12) der Mischkammer (2) angeordneten Drosselspalt (15).

2.    Verfahren nach Anspruch 1, **dadurch gekennzeichnet**, daß der Druck in den Komponentenzulaufleitungen (3,4,5) unmittelbar vor der Einmündung in die Mischkammer (2) zwischen 80 und 180 bar liegt.

3.    Verfahren nach Anspruch 2, **dadurch gekennzeichnet**, daß der Druck in den Komponentenzulaufleitungen (3,4) für die Komponenten A und B unmittelbar vor der Einmündung in die Mischkammer (2) im Bereich von 140-160 bar und der Druck in der Komponentenzulaufleitung (5) für die Komponente C unmittelbar vor der Einmündung in die Mischkammer (2) im Bereich von 80 bis 110 bar liegt.

4.    Verfahren nach einem der Ansprüche 1 bis 3, **dadurch gekennzeichnet**, daß die Temperaturen der Komponenten A, B und gegebenenfalls C unmittelbar vor der Einmündung in die Mischkammer zwischen $20^0$C und $60^0$C liegen.

5. Verfahren nach einem der Ansprüche 1 bis 4, **dadurch gekennzeichnet**, daß die Zudosierung der Komponenten A, B und C, und die Bemessung der Mischkammer (2) und des Drosselspaltes (15) nach der Maßgabe erfolgt, daß sich am Drosselspalt (15) eine Austrittsgeschwindigkeit für das Komponentengemisch im Bereich von 8 bis 16 m/s ergibt.

6. Vorrichtung zur Durchführung des Verfahrens nach einem der Ansprüche 1 bis 5, **dadurch gekennzeichnet**, daß der Drosselspalt (15) durch einen an der Austrittsöffnung (12) der Mischkammer (2) angeordneten Querschieber gebildet wird.

7. Vorrichtung zur Durchführung des Verfahrens nach einem der Ansprüche 1 bis 5, **dadurch gekennzeichnet**, daß der Drosselspalt durch eine im Angußkanal eines Formwerkzeugs ausgebildete Verengung gebildet wird.

8. Vorrichtung zur Durchführung des Verfahrens nach einem der Ansprüche 1 bis 5, **dadurch gekennzeichnet**, daß sich an die Mischkammer (2), vorzugsweise im rechten Winkel eine Beruhigungskammer (13) mit im Vergleich zur Mischkammer größerem Querschnitt anschließt, in der ein weiterer reversierbarer Kolben (14) angeordnet ist, mit dem in einer die Austrittsöffnung (12) der Mischkammer (2) teilweise verschließenden Stellung ein einstellbarer Drosselspalt (15) erzeugbar ist.

9. Vorrichtung zur Durchführung des Verfahrens nach einem der Ansprüche 1 bis 8, **dadurch gekennzeichnet**, daß die Komponentenzulaufleitungen (3,4,5) im Winkel von jeweils von $90^0$ zueinander in die Mischkammer (2) einmünden.

_Fig.1_

1

3

II

II

6

9 7 8

4

2

10

9

5

12

14

15

13

_Fig.2._

B

4

3

6

7

5

A

11

8

C

Europäisches
Patentamt

EUROPÄISCHER RECHERCHENBERICHT

Nummer der Anmeldung

EP    91 10 4260
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 980 388 (R.D. HERRINGTON ET AL)<br><br>* Spalte 2, Zeile 20 – Zeile 44 *<br>* Spalte 3, Zeile 45 – Zeile 48 *<br>* Spalte 4, Zeile 22 – Zeile 32 *<br>* Spalte 4, Zeile 48 – Zeile 62 *<br>* Spalte 6, Zeile 31 – Zeile 36; Ansprüche 1,8,9,10,12,15 *<br><br>--- | 1,2,4,7,8 | B29B7/76<br>C08G18/50<br>C08L75/02 |
| Y | GB-A-2 086 747 (ADMIRAL MASCHINENFABRIK GMBH)<br><br>* Seite 2, Zeile 29 – Zeile 43; Ansprüche 1,5; Abbildungen 1-7 *<br><br>--- | 1,2,4,7,8 | |
| A | EP-A-0 286 005 (THE DOW CHEMICAL COMPANY)<br>* Seite 3, Zeile 9 – Zeile 20 *<br>* Seite 7, Zeile 21 – Zeile 32; Ansprüche 9-12 *<br><br>--- | 1,2,4,8 | |
| A | EP-A-0 135 867 (BAYER AG)<br>* Seite 40, Zeile 1 – Zeile 16; Ansprüche 1-3,6,7 *<br><br>--- | 1,2,4,8 | |
| A | GB-A-2 129 324 (KRAUSS-MAFFEI AG)<br>* Ansprüche 1,5; Abbildung 2 *<br><br>--- | 1,2,7,8 | RECHERCHIERTE SACHGEBIETE (Int. Cl.5)<br><br>B29B<br>C08G<br>C08L |
| A | DE-U-8 622 321 (IBW INGENIEUR-BÜRO WOITZEL GMBH)<br>* Seite 2, Zeile 25 – Zeile 36; Ansprüche 1-6 *<br><br>--- | 1,6,7 | |
| A | EP-A-0 219 167 (THE DOW CHEMICAL COMPANY)<br>* Spalte 7, Zeile 6 – Spalte 8, Zeile 24; Ansprüche 1-6 *<br><br>--- | 1,8 | |
| A | EP-A-0 070 486 (MASCHINENFABRIK HENNECKE GMBH)<br>* Seite 1, Zeile 1 – Zeile 10 *<br>* Seite 2, Zeile 5 – Zeile 14 *<br>* Seite 4, Zeile 1 – Zeile 5; Ansprüche 1,2; Abbildung 1 *<br><br>--- | 1 | |
| A | EP-A-0 045 555 (GRUPPO VIKITALIA S.P.A.)<br>* Ansprüche 1-3; Abbildung 1 * | 1 | |

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | VAN NIEUWENHUIZE O. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| | --- | | |
| A | PATENT ABSTRACTS OF JAPAN<br>vol. 12, no. 338 (C-527)(3185) 12. September 1988<br>& JP-A-63 097 218 ( POLYURETHAN ENG K.K. ) 27. April 1988<br>* Zusammenfassung * | 1,6 | |
| | ----- | | |

**RECHERCHIERTE SACHGEBIETE (Int. Cl.5 )**

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | VAN NIEUWENHUIZE O. |